(19) Europäisches Patentamt / European Patent Office / Office européen des brevets

(11) **EP 3 427 457 B1**

(12) **FASCICULE DE BREVET EUROPEEN**

(45) Date de publication et mention
de la délivrance du brevet:
**09.09.2020 Bulletin 2020/37**

(51) Int Cl.:
**H04L 27/26** *(2006.01)*    **H04L 25/03** *(2006.01)*

(21) Numéro de dépôt: **17713751.0**

(22) Date de dépôt: **13.03.2017**

(86) Numéro de dépôt international:
**PCT/FR2017/050560**

(87) Numéro de publication internationale:
**WO 2017/153699 (14.09.2017 Gazette 2017/37)**

(54) **PROCÉDÉ ET DISPOSITIF DE TRANSMISSION MULTISERVICE AVEC MODULATION FC-OFDM ET RÉCEPTEUR CORRESPONDANT**

VERFAHREN UND VORRICHTUNG FÜR MEHRDIENSTÜBERTRAGUNG MIT FC-OFDM-MODULATION UND ENTSPRECHENDER EMPFÄNGER

METHOD AND DEVICE FOR MULTI-SERVICE TRANSMISSION WITH FC-OFDM MODULATION AND CORRESPONDING RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2016 FR 1652050**
**15.04.2016 FR 1653372**

(43) Date de publication de la demande:
**16.01.2019 Bulletin 2019/03**

(73) Titulaire: **ORANGE**
**75015 Paris (FR)**

(72) Inventeur: **LIN, Hao**
**35510 Cesson Sevigne (FR)**

(56) Documents cités:
**EP-A1- 2 890 190     WO-A1-2014/072991**
**WO-A1-2014/123926     US-A1- 2014 307 810**

- **HAO LIN: "Flexible Configured OFDM for 5G Air Interface", IEEE ACCESS, vol. 3, 1 janvier 2015 (2015-01-01), pages 1861-1870, XP055276445, DOI: 10.1109/ACCESS.2015.2480749**

- **ZTE: "Discussion on DMRS Enhancement for PC5-based V2V", 3GPP DRAFT; R1-156660 DISCUSSION ON DMRS ENHANCEMENT FOR PC5-BASED V2V, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Anaheim, USA; 20151115 - 20151122 7 novembre 2015 (2015-11-07), XP051022422, Extrait de l'Internet: URL:http://www.3gpp.org/ftp/tsg_ran/WG1_RL 1/TSGR1_83/Docs/ [extrait le 2015-11-07]**
- **"The 5G Unified Air Interface", , 30 novembre 2015 (2015-11-30), XP055269802, Extrait de l'Internet: URL:https://www.qualcomm.com/media/docum en ts/files/5g-unified-air-interface-presenta tion.pdf [extrait le 2016-05-02]**
- **January 28 2016: "FANTASTIC-5G: Novel, flexible air interface for enabling efficient multi- service coexistence for 5G below 6GHz Frank Schaich with support from the whole consortium", , 28 janvier 2016 (2016-01-28), XP055321803, Extrait de l'Internet: URL:https://docbox.etsi.org/Workshop/2016/ 201601_FUTURERADIOTECHNOL_WORKSHOP/ S04_NEW _RADIO_ACCESS_TECHNO_SERV_ENVIR_PAR T_1/FAN TASTIC_5G_SCHAICH_ALCATEL-LUCENT.pdf [extrait le 2016-11-22]**

**Description**

**Domaine de l'invention**

Le domaine de l'invention est celui des transmissions mettant en œuvre une modulation multi porteuses générant des symboles orthogonaux telle une modulation OFDM.

L'invention trouve notamment des applications dans le domaine des communications sans fil ou filaires mettant en œuvre une modulation multi porteuses, par exemple pour des communications cellulaires LTE / LTE-A, pour des communications sans fil WIFI, WiMAX, pour des communications filaires PLC, ADSL, pour de la diffusion DVB-T, DVB-T2, DVB-H, DVB-NGH.

En particulier et sans être limitatif, l'invention trouve des applications dans les systèmes de futures générations (5G, etc.) pour lesquels il y aura une transmission simultanée sur voie montante de communications cellulaires de haut débit dites MBB (acronyme des termes anglosaxons « Mobile Broadband Communications ») et des communications sporadiques à bas débit associées à des capteurs dites IoT (acronyme des termes anglosaxons « Internet of Things ») ou dites MTC (acronyme des termes anglosaxons « Machine Type Communications ») et/ou des communications V2X (Vehicular to Vehicular/Infrastructure communications) et/ou encore des communications MCC (acronyme des termes anglosaxons « Mission Critical Communications ») en référence à la terminologie utilisée dans les groupes de travail associés au 3GPP et visant à définir des versions au-delà de la version 13 du LTE.

**Art antérieur**

Dans les années à venir, il est prévu une densification des réseaux de capteurs qui ont pour rôle de remonter des données vers une entité d'exploitation de ces données. On peut déjà citer les réseaux existants de caméras de vidéo-surveillance qui remontent des données vidéo. Il y a d'autres réseaux en cours de déploiement dans des domaines très variés tels que l'énergie avec la remontée de données de consommation de gaz ou d'électricité et tels que la santé avec la remontée de données physiologiques de patients. Il y a donc une augmentation prévisible de transmissions d'informations qui transiteront par un même lien physique qui sera souvent un lien radio. Les capteurs sont habituellement considérés comme statiques contrairement aux terminaux des communications cellulaires.

Il est aussi prévu la commercialisation de véhicules connectés permettant l'offre d'applications Internet regroupées sous la terminologie service V2X. Selon certains scénarios envisagés, les communications interviennent entre deux véhicules qui se déplacent en sens inverse et à grande vitesse, ou qui interviennent entre un véhicule et une station de base ou entre un véhicule et un relais pour lesquels la vitesse relative est importante. En tout état de cause, la qualité de service doit être garantie, la transmission doit être fiable même lorsque la vitesse relative est importante (jusqu'à 500km/h) et l'effet Doppler conséquent.

Un service IoT c'est-à-dire associé aux communications sporadiques impose que le dispositif IoT ait une très faible consommation de puissance pour assurer une durée de vie de la batterie pouvant aller jusqu'à une dizaine d'années. En outre le coût de revient du dispositif IoT doit être très faible ce qui implique que sa complexité matérielle doit être très réduite. Une autre contrainte importante du service IoT est un coût de signalisation qui doit être particulièrement faible étant donné que plus de 100 000 dispositifs peuvent être connectés à l'intérieur d'une seule cellule.

Pour le service MBB c'est-à-dire associé aux communications cellulaires de haut débit l'efficacité spectrale est très importante. Les communications cellulaires sont sous-entendues mises en œuvre avec des systèmes de transmission mobile large bande. La qualité de service est un autre facteur également très important vis-à-vis de l'utilisateur. Par contre, la consommation de puissance est un critère moins critique que pour le service IoT.

Un service MCC est dédié à des utilisations dans un contexte d'urgence où la fiabilité des informations reçues est vitale. Ceci concerne par exemple les situations de cataclysme avec la recherche de personnes ensevelies ou les téléopérations médicales.

L'article [IEEE Access] décrit pour un lien descendant uniquement, un procédé de transmission de données correspondant à un service MBB et à un service V2X modulées avec une même transformée fréquence temps, IFFT, de taille M. avec une configuration flexible. Dans une liaison descendante la station de base sert plusieurs terminaux simultanément. A chaque terminal est associé un service qui peut être différent entre les terminaux. Le système FC-OFDM partage la bande en sous-bandes pour traiter simultanément différents services par la même IFFT.

Chaque terminal peut transmettre indépendamment d'un autre terminal des données associées à un service qui peut tout aussi bien être une communication cellulaire dit service MBB, une communication entre objets communicants dit service IoT, une communication entre un émetteur et un récepteur se déplaçant avec une vitesse relative élevée conduisant à un fort effet Doppler dit service V2X, une communication dédiée à des utilisations nécessitant une très forte fiabilité dit service MCC.

Le 3GPP définit ainsi des règles [3GPP] pour qu'une station de base soit en mesure de recevoir simultanément des communications provenant de terminaux mobiles qui exigent une connectivité presque permanente avec un haut voire très haut débit (plusieurs Mega bits/s) et des communications sporadiques provenant de capteurs. Les transmissions issues des capteurs ont en outre la particularité d'être bas débit (quelques bits/s, environ 20 octets par jour), de caractère aléatoire et ponctuel. Les communications MTC sont basées sur une chaîne d'émission similaire à celle spécifiée pour les communications MBB.

Ainsi, le standard LTE du 3GPP spécifie depuis la version 8 (release 8) une forme d'onde unique dite DFT-s-OFDM pour les communications en voie montante UL (acronyme des termes anglosaxons « uplink »). La modulation est une modulation multi porteuses de type OFDM et chaque entité émet pendant un certain nombre d'intervalles de temps (« time slot » selon la terminologie anglosaxone).

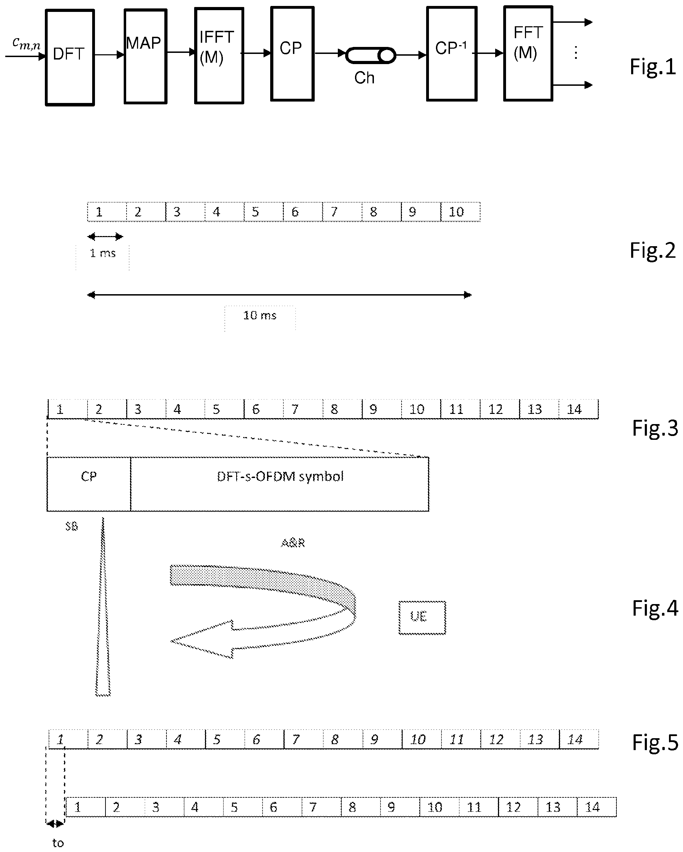

La chaîne d'émission de la forme d'onde DFT-s-OFDM est illustrée par la figure 1. La chaîne comprend un précodeur mettant en œuvre une transformée de Fourier discrète DFT (acronyme des termes anglosaxons « Discrète Fourier Transform »), un mappeur MAP, une transformation fréquence temps réalisée au moyen d'une IFFT (acronyme des termes anglosaxons « Inverse fast Fourier Transform ») sur M points et une mise en forme avec l'ajout dans le domaine temporel d'un préfix cyclique CP.

Les symboles complexes $c_{m,n}$ issus d'une modulation binaire à symboles (constellation QAM) sont précodés par le précodeur. Le précodeur est utilisé pour obtenir un signal dont les caractéristiques dans le domaine temporel sont similaires à celles obtenues avec une modulation avec une simple porteuse, c'est-à-dire avec un faible PAPR (acronyme des termes anglosaxons « Peak to Average Power Ratio »).

Les symboles précodés sont mappés en entrée de l'IFFT sur les différentes sous porteuses. La taille M de la IFFT détermine le nombre de sous porteuses et la bande du signal de sortie.

L'ajout d'un préfix cyclique CP intervient dans le domaine temporel, soit après une mise en série des échantillons d'un symbole DFT-s-OFDM en sortie de la IFFT. Cet ajout revient à insérer en début du symbole DFT-s-OFDM une copie des derniers échantillons de ce symbole. Ce préfix cyclique a pour fonction d'absorber le délai maximum associé aux trajets multiples ou délai d'étalement du canal (« delay spread » selon la terminologie anglosaxone) et de lutter contre des interférences inter symboles liées à des recouvrements temporels dus à cet étalement.

Selon le mécanisme standardisé pour le LTE pour les transmissions en voie montante, la station de base envoie des signaux de synchronisation aux terminaux de manière à ce que les trames qu'ils émettent arrivent de manière synchronisée avec une référence temporelle de la station de base. Ce mécanisme est dit à boucle fermée (« close loop » selon la terminologie anglosaxone). La station envoie une valeur temporelle spécifique (« timing advance » selon la terminologie anglosaxone) à chaque terminal pour aligner temporellement les signaux des terminaux à la réception par la station de base. Cette valeur est déterminée de façon à ce que le décalage temporel résiduel (« time offset » selon la terminologie anglosaxone) à l'arrivée d'un signal reçu n'excède pas la fenêtre d'extraction du préfix cyclique diminuée du délai d'étalement (delay spread) du canal.

Ce mécanisme dit de « timing advance » selon la terminologie du standard LTE a pour fonction de préserver l'orthogonalité entre les transmissions des différents terminaux et de chaque transmission à la réception par la station de base. La figure 2 représente la structure d'une trame générée par la station de base qui a une durée de 10ms et est composée de sous-trames de durée 1ms.

Les trames émises par les terminaux ont la même structure. Dans chaque sous-trame, il y a 14 symboles DFT-s-OFDM. Chaque symbole DFT-s-OFDM est précédé d'un préfix cyclique CP comme illustré par la figure 3. Quand un utilisateur/terminal est autorisé à transmettre des données, il lui est alloué un certain nombre de sous-trames. Par exemple, la 1ère sous-trame.

Le mécanisme de « timing advance » consiste à synchroniser les trames reçues provenant des terminaux sur une référence temporelle de la station de base. Pour la clarté de l'exposé, l'illustration considère qu'il consiste à aligner les trames reçues avec une trame de la station de base.

Ainsi, si un utilisateur transmet dans la 1ère sous-trame alors la station de base détermine une valeur de temps tenant compte du temps aller-retour A&R entre la station de base SB et le terminal UE comme illustré par la figure 4. En effet, il y a le temps de transmission du signal de contrôle contenant la valeur de temps et le temps de transmission des données depuis le terminal.

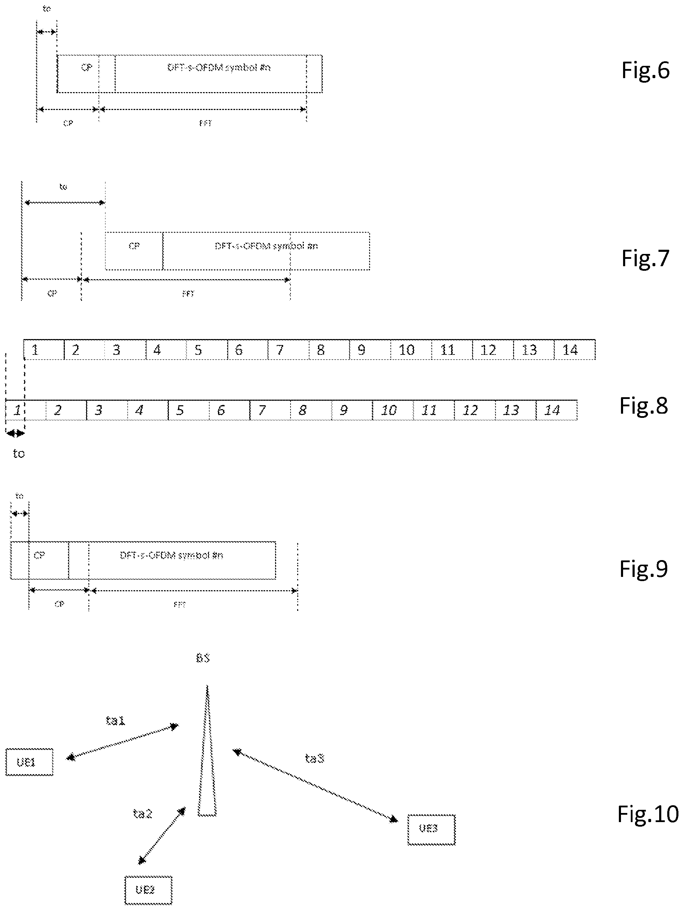

Malgré que le terminal prenne en compte cette valeur de temps pour synchroniser son émission, la sous-trame dans laquelle sont ses données peut néanmoins arriver à la station de base avec un décalage temporel to (time offset) comme illustré par la figure 5. Ce décalage se retrouve au niveau du symbole DFT-s-OFDM comme illustré par la figure 6 qui représente un nième symbole DFT-s-OFDM noté DFT-s-OFDM #n. Cette figure 6 illustre le positionnement à la réception de la fenêtre pour extraire le CP et de la fenêtre pour extraire les échantillons sur lesquels est effectuée la FFT.

Ainsi, si le décalage to est plus petit que la durée du CP, comme illustré par la figure 6, l'orthogonalité peut être maintenue. En effet, même si la fenêtre pour la FFT couvre des échantillons inclus dans le CP, ceux-ci étant une recopie d'échantillons du symbole DFT-s-OFDM, alors la FFT porte uniquement sur des échantillons appartenant à un seul symbole DFT-s-OFDM. Il n'y a pas de perte d'information.

Si le décalage to est plus grand que la durée du CP, comme illustré par la figure 7 qui représente un nième symbole DFT-s-OFDM noté DFT-s-OFDM #n, l'orthogonalité est perdue. En effet, la fenêtre d'extraction des échantillons pour la FFT couvre des échantillons qui ne sont ni dans le CP, ni dans le symbole DFT-s-OFDM lui-même. Ces échantillons appartiennent généralement à un précédent symbole DFT-s-OFDM. Il y a une perte d'information due à la perte d'orthogonalité.

La valeur de temps transmise par la station de base peut s'avérer trop petite et le décalage être négatif conduisant à une situation anti-causal comme illustré par la figure 8. Dans cette situation, le symbole DFT-s-OFDM arrive en avance comme illustré par la figure 9 qui représente un nième symbole DFT-s-OFDM noté DFT-s-OFDM #n. Dans cette situation, quelle que soit la longueur du CP, l'orthogonalité ne peut jamais être maintenue puisqu'il manque toujours des échantillons utiles dans la fenêtre de la FFT et en outre celle-ci couvre toujours des échantillons qui n'appartiennent pas au symbole DFT-s-OFDM.

Comme illustré par la figure 10, la station de base BS doit signaler à chaque terminal UE1, UE2, UE3 une valeur de temps ta1, ta2, ta3. Ce mécanisme de synchronisation est bien adapté au service MBB.

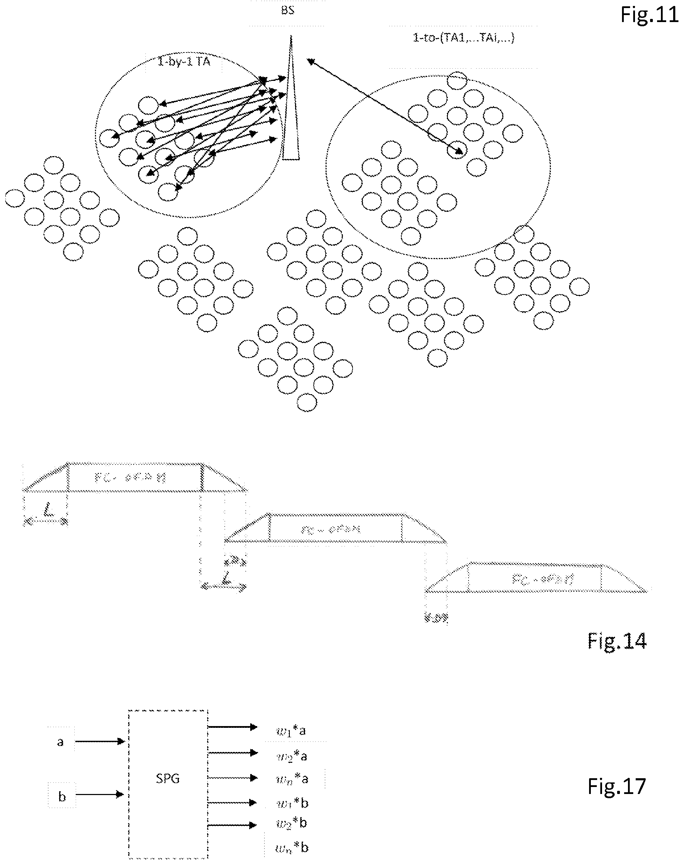

Il n'est toutefois pas du tout adapté pour certains services comme un service IoT. En effet, si un tel mécanisme de synchronisation est mis en œuvre avec un service IoT, il y a une perte de bande passante (« overhead » selon la terminologie anglosaxone) qui est d'autant plus importante et inacceptable qu'il y a d'objets communicants servis par la station. Un mécanisme envisagé consiste à utiliser une synchronisation grossière (« coarse synchronisation » selon la terminologie anglosaxone) comme illustré par la figure 11. Le mécanisme de synchronisation du LTE, 1-by-1 TA, conduit à une surcharge de signalisation comme illustré sur la partie gauche de la figure 11. Le mécanisme de synchronisation grossier, 1-to-(TA1,...,TAi...) consiste à déterminer une valeur temporelle pour un groupe d'objets. Mais ce mécanisme grossier n'est pas compatible du standard LTE puisqu'il conduit à des décalages temporels to négatifs anti causal pour certains objets d'un groupe et des décalages to positifs causal pour d'autres objets du même groupe ce qui entraînera des pertes de synchronisation et par suite un impact négatif sur les performances.

Il existe donc un besoin pour une technique de transmission multi services basée sur une modulation multi porteuses orthogonale, les services étant rendus par des communications synchrones ou des communications avec une synchronisation grossière voire sans synchronisation qui sont reçues simultanément par une station de base.

## Exposé de l'invention

L'invention est comme défini dans les revendications indépendantes.

Le dispositif est adapté pour mettre en œuvre le procédé de transmission selon l'invention. En particulier, le démultiplexeur peut ainsi effectuer une mise en trame avec ou sans recouvrement temporel entre symboles successifs.

L'invention détermine ainsi un nouveau format de modulation multi porteuses qui par l'ajout d'un préfix et/ou d'un postfix cycliques formant une extension cyclique de $L$ échantillons aux symboles multi porteuses orthogonaux combiné à un filtrage portant sur M + L échantillons permet une réception plus robuste à une absence de synchronisation. Le filtre utilisé f(n) présente des transitions aux deux bords qui participent et accentuent l'effet d'absorption, d'un étalement des délais de transmission (delay spread) alors que l'absence de pondération sur les M échantillons du symbole multi porteuses selon l'art antérieur conduit à des lobes secondaires importants et à un étalement du spectre du signal transmis. Selon l'invention, tous les M échantillons du symbole ne sont pas pondérés par une fenêtre carrée comme dans l'art antérieur. En pondérant de manière particulière les préfix, postfix et une partie des échantillons du symbole multi porteuses, l'invention permet d'atteindre une meilleure efficacité spectrale en atténuant les lobes secondaires («out of band leakage » selon la terminologie anglosaxone) et en concentrant le spectre («spectrum confinement» selon la terminologie anglosaxone) par rapport à l'art antérieur tout en conservant une robustesse à une absence de synchronisation. La concentration du spectre contribue en outre à un maintien de l'orthogonalité entre eux des symboles.

Un procédé de réception de données correspondant à un service parmi plusieurs services de communication met en œuvre une même transformée temps fréquence quel que soit le service, tel que :

- il effectue un filtrage temporel identique au filtrage $f(n)$ utilisé en émission sur une séquence de longueur $M + L$ échantillons,
- il replie en les ajoutant $L$ échantillons d'extrémité de la séquence sur $L$ parmi M échantillons centraux de la séquence,
- il transforme les M échantillons centraux de la séquence mappés en entrée de la transformée temps fréquence de taille $M$ pour générer des symboles de données et
- il dé-mappe les symboles de données.

Cette structure de réception dans le domaine temporel a une faible complexité et est adaptée pour le traitement des préambules et l'estimation de canal à partir de la réception de données transmises selon l'invention.

Selon un mode de réalisation, les échantillons repliés sont les $L$ derniers échantillons de la séquence et ils sont repliés en les ajoutant aux $L$ premiers échantillons de la séquence. Le repliement peut consister à additionner les $L$ derniers échantillons de la séquence aux $L$ premiers échantillons de la séquence puis à supprimer les $L$ derniers échantillons de la séquence. Ce mode est adapté à un symbole FC-OFDM émis qui comprend uniquement un postfix de $L$ échantillons.

Selon un mode de réalisation, les échantillons repliés sont les $L$ premiers échantillons de la séquence et ils sont repliés en les ajoutant aux $L$ derniers échantillons de la séquence. Le repliement peut consister à additionner les $L$ premiers échantillons de la séquence aux $L$ derniers échantillons de la séquence puis à supprimer les $L$ premiers échantillons de la séquence. Ce mode est adapté à un symbole FC-OFDM émis qui comprend uniquement un préfix de $L$ échantillons.

Selon un mode de réalisation, les $L_1$ et $L_2$ échantillons de chaque extrémité de la séquence sont repliés en les ajoutant respectivement aux $L_1$ échantillons de fin et aux $L_2$ échantillons de début des M échantillons centraux de la séquence. Ce mode est adapté à un symbole FC-OFDM émis qui comprend un préfix de $L_1$ échantillons et un postfix de $L_2$ échantillons.

Un procédé de réception de données correspondant à un service parmi plusieurs services de communication met en œuvre une même transformée temps fréquence quel que soit le service, tel que :

- il transforme une séquence de $M + L$ échantillons reçus complétée avec des zéro mappée en entrée de la transformée temps fréquence de taille $2M$ pour générer $2M$ échantillons fréquentiels,
- il effectue un filtrage fréquentiel inverse d'un filtrage temporel $f(n)$ utilisé en émission sur une séquence de longueur $2M$ échantillons fréquentiels,
- il extraie de la séquence fréquentielle filtrée les échantillons d'indice paire pour obtenir une séquence fréquentielle de longueur $M$ de symboles de données,
- il dé-mappe les symboles de données.

Cette structure de réception dans le domaine fréquentiel est plus robuste vis-à-vis du délai de propagation (delay spread) que la structure dans le domaine temporel, elle permet une détection correcte du signal utile même en l'absence de CP classique à partir de la réception de données transmises selon l'invention.

Un récepteur de télécommunication multi services met en œuvre une modulation multi porteuse comprenant :

- un filtre temporel identique à un filtre f(n) utilisé en émission pour filtrer une séquence de longueur M+L échantillons,
- un calculateur pour replier en les ajoutant $L$ échantillons d'extrémité de la séquence sur $L$ parmi M échantillons de la séquence,
- une même transformée temps fréquence de taille M quel que soit le service pour générer des symboles de données à partir des M échantillons mappés en entrée et
- un démultiplexeur pour dé-mapper les symboles de données.

Un récepteur de télécommunication multi services met en œuvre une modulation multi porteuse comprenant :

- une même transformée temps fréquence de taille $2M$ quel que soit le service pour générer $2M$ échantillons fréquentiels à partir d'une séquence de $M + L$ échantillons reçus complétée avec des zéro en entrée,
- un filtre fréquentiel inverse d'un filtre temporel $f(n)$ utilisé en émission pour filtrer une séquence de longueur $2M$ échantillons fréquentiels,
- un sélectionneur pour extraire de la séquence fréquentielle filtrée les échantillons d'indice paire et pour obtenir une séquence fréquentielle de longueur $M$ de symboles de données,
- un démultiplexeur pour dé-mapper les symboles de données.

Ces récepteurs sont particulièrement adaptés pour recevoir des données transmises selon l'invention.

Selon un mode de réalisation de l'invention, l'extension cyclique comporte un préfix cyclique de $L_1$ échantillons et un postfix cyclique de $L_2$ échantillons, $L_1 \neq 0$ et $L_2 \neq 0$. Ce mode permet d'obtenir un symbole symétrique ou pas. Lorsque $L_1 = 0$ ou $L_2 = 0$ alors le symbole obtenu est toujours dissymétrique.

La fonction $f(n)$ peut tout aussi bien être non-symétrique : $f(n) \neq f(M + L - 1 - n)$ pour $n \in [0, L - 1]$ que symétrique : $f(n) = f(M + L - 1 - n)$ pour $n \in [0, L - 1]$. Une fonction non-symétrique est avantageusement plus robuste qu'une fonction symétrique pour des transmissions radio. Par contre lorsque la fenêtre $f(n)$ est symétrique ceci signifie que le nombre de coefficients du filtre à stocker est divisé par deux. Ainsi, si ces coefficients sont calculés en temps réel, ce mode conduit donc à une réduction de complexité.

Selon un mode de réalisation de l'invention, la transmission respecte une trame temps fréquence avec des préambules multiplexés dans la trame selon une configuration dépendante du service sous contrainte d'un nombre maximum de préambules, la configuration dépendante du service pouvant permettre de sélectionner un multiplexage en temps des préambules ou un multiplexage en temps et en fréquence des préambules.

Le procédé d'émission et le dispositif d'émission selon l'invention sont ainsi flexibles puisque dépendant d'une configuration associée au service correspondant aux données sources à transmettre. Lors d'une utilisation en voie montante c'est-à-dire depuis un terminal vers un point d'accès, une station de base par exemple, des données sont transmises des terminaux au point d'accès. Chaque terminal peut transmettre des données associées à un service qui peut tout aussi bien être un service MBB, un service IoT, un service V2X, un service MCC. Les services pouvant intervenir successivement sur un même terminal et simultanément entre différents terminaux, l'émetteur du terminal doit pouvoir les émettre et le récepteur de la station de base doit pouvoir les réceptionner simultanément. Seul un entrelacement en temps des préambules toutes les 0,5ms est spécifié dans le standard LTE release 12 voie montante.

Selon ce mode, la trame émise comporte toujours un multiplexage en temps des préambules dont la régularité est typiquement calquée sur la trame du standard LTE qui permet donc de garantir la compatibilité avec ce standard.

Les cas d'usage pour le service V2X prennent en compte des vitesses pouvant aller jusqu'à 500km/h et une bande de 2GHz. Dans de telles conditions le temps de cohérence du canal est de 0,4ms et par conséquent un préambule toutes les 0,5ms ne permet pas d'estimer correctement le canal et de suivre ses évolutions.

Selon ce mode, en combinant un multiplexage des préambules dans les deux axes, il devient possible de déterminer une structure des préambules dans le plan temps fréquence permettant d'obtenir une estimation du canal compatible du temps de cohérence. La contrainte du nombre maximal de préambules multiplexés permet de conserver le même débit (pas d'augmentation de la perte de bande associée (overhead)). Une telle structure est particulièrement adaptée pour un service V2X puisqu'elle permet d'adapter la structure au temps de cohérence du canal sans augmenter la perte de bande.

Selon un mode de réalisation, l'invention adapte les données avant mappage en entrée de la transformée fréquence temps selon une configuration dépendante du service pour générer des symboles de données utilisés pour le mappage, la configuration dépendante du service pouvant permettre de sélectionner aucun, un ou plusieurs traitements parmi un bourrage, une transformée de Fourier discrète de taille N, un étalement.

Pour un service MBB, la configuration permet de sélectionner typiquement la transformée de Fourier discrète de taille N et le multiplexage en temps des préambules. Pour un service V2X, la configuration permet de sélectionner typiquement la transformée de Fourier discrète de taille N et le multiplexage en temps et en fréquence des préambules. Pour un service MCC, la configuration permet de sélectionner typiquement la transformée de Fourier discrète de taille N, l'étalement et le multiplexage en temps des préambules. Pour un service IoT, la configuration permet de sélectionner typiquement le bourrage, la transformée de Fourier discrète de taille N et le multiplexage en temps des préambules.

Selon un mode de réalisation, l'étalement a un facteur d'étalement $P$ et chaque donnée étalée est multipliée par un poids $w_p$, $p = 1, ..., P$.

L'étalement permet d'augmenter la diversité de chaque donnée transmise. Ce mode est particulièrement adapté à un service MCC qui nécessite une très grande fiabilité de transmission.

Selon un mode de réalisation, $a(n) = \cos(\frac{\pi}{L}(L - 1 - n))$ et $b(n) = \sin(\frac{\pi}{L}(M + L - 1 - n))$. Selon ce mode, la fonction $f(n)$ obtenue est symétrique.

Selon un mode de réalisation, $a(n) = \cos(\frac{\pi}{2L^2}(L - 1 - n)^2)$ et $b(n) = \sin(\frac{\pi}{2L^2}(M + L - 1 - n)^2)$. Selon ce mode, la fonction (fenêtre) f(n) n'est pas symétrique ce qui conduit a plus de robustesse contre le délai d'étalement (delay spread).

Selon un mode de réalisation, $b(n) = e^{-\left(\alpha\left(\frac{n-M}{L}\right)^\beta\right)}$ et $a(n) = \sqrt{1 - b^2(n + M)}$ pour $n \in [0, L - 1]$, $\alpha$ et $\beta$ étant des paramètres ayant une valeur réelle strictement supérieur à zéro. Ce mode permet d'obtenir soit une fonction $f(n)$ symétrique, soit une fonction $f(n)$ non-symétrique en fonction de la valeur des paramètres $\alpha$ et $\beta$

Selon un mode de réalisation, lors de la mise en trame deux symboles successifs se recouvrent en temps d'une valeur $D$, $D$ étant un entier supérieur ou égal à zéro. Ce mode permet de diminuer l'impact sur le débit de l'ajout d'une extension cyclique.

Selon un mode de réalisation, l'invention comprend l'émission d'un message de signalisation codant la configuration.

## Liste des figures

D'autres caractéristiques et avantages de l'invention apparaîtront lors de la description qui suit faite en regard des figures annexées données à titre d'exemple non limitatif.

La figure 1 est un schéma de la chaîne d'émission de la forme d'onde DFT-s-OFDM selon l'art antérieur.
La figure 2 est un schéma de la structure d'une trame générée par la station de base qui a une durée de 10ms et est composée de sous-trames de durée 1ms conformément au standard LTE.
La figure 3 est un schéma d'une sous-trame qui comprend 14 symboles DFT-s-OFDM, chaque symbole DFT-s-OFDM étant précédé d'un préfix cyclique CP conformément au standard LTE.

La figure 4 est un schéma illustrant le mécanisme de synchronisation en voie montante du standard LTE avec représentation du temps aller-retour A&R entre la station de base SB et le terminal UE.

La figure 5 est un schéma représentant un décalage temporel to (time offset) entre la trame de référence (station de base) pour la synchronisation et la trame reçue.

La figure 6 est un schéma représentant le décalage temporel to (time offset) au niveau du symbole DFT-s-OFDM ainsi que le positionnement de la fenêtre d'extraction du CP et de la fenêtre de la FFT par rapport au symbole DFT-s-OFDM.

La figure 7 est un schéma identique à celui de la figure 6 avec un décalage to supérieur à la fenêtre d'extraction du CP.

La figure 8 est un schéma identique à celui de la figure 5 avec un décalage to négatif.

La figure 9 est un schéma identique à celui de la figure 6 avec un décalage to négatif.

La figure 10 est un schéma illustrant le mécanisme de synchronisation entre la station de base et chaque terminal UE1, UE2, UE3 avec l'envoi d'une signalisation contenant la valeur de temps tal, ta2, ta3.

La figure 11 est un schéma illustrant un mécanisme de synchronisation grossier pour un service IoT.

La figure 12 est un schéma de la technique de transmission selon l'invention mis en œuvre par un terminal.

La figure 13 est un schéma illustrant l'ajout de préfix et de postfix cycliques sur un symbole en sortie de IFFT ainsi que l'effet du filtrage selon un mode de réalisation.

La figure 14 est un schéma illustrant une mise en trame avec recouvrement temporel entre symboles successifs.

La figure 15 représente une sous-trame de 1ms conforme au standard LTE dans laquelle les préambules sont multiplexés à la 4e et la 11e position.

La figure 16 illustre le multiplexage simultané en temps et en fréquence des préambules selon l'invention.

La figure 17 est un exemple d'étalement.

La figure 18 est un schéma d'un exemple de mise en œuvre d'un procédé de transmission selon l'invention.

Les figures 19 et 20 sont des schémas illustrant respectivement deux modes de réalisation de la réception selon l'invention.

La figure 21 est un schéma d'un mode de réalisation du repliement intervenant dans le mode de la figure 19.

## Description de modes de réalisation de l'invention

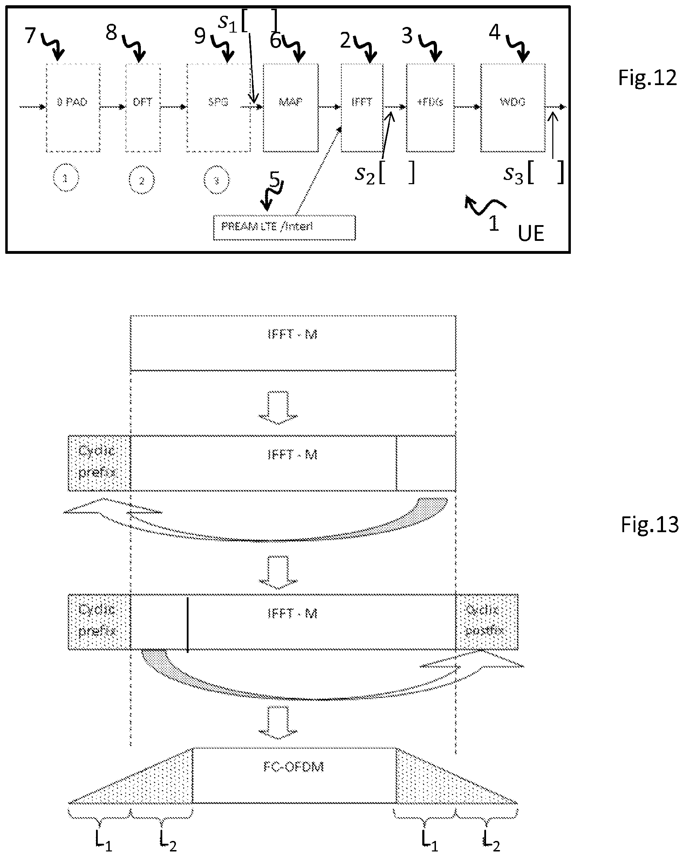

La technique de transmission selon l'invention est illustrée par la figure 12. Le procédé 1 de transmission selon l'invention mis en œuvre par un terminal UE génère un nouveau format de modulation multi porteuses configurable en fonction du service avec la mise en œuvre d'une même transformée fréquence temps de taille $M$ et d'un même traitement après IFFT quel que soit le service qui permettent le traitement simultané à la réception de données associées à différents services. Ce schéma est appelé FC-OFDM.

Le nouveau format de modulation est obtenu avec l'ajout 3 (+FIXs) d'un préfix et/ou d'un postfix cycliques aux symboles multi porteuses orthogonaux générés 2 par la transformée fréquence temps IFFT combiné à un filtrage 4 par un filtre WDG portant sur M + L échantillons. $L$ et $M$ sont des naturels non nuls. En notant $s_1$ [ ] la séquence à mapper en entrée de IFFT, $s_2$ [ ] la séquence avant ajout de préfix et/ou postfix cycliques et $s_3$ [ ] la séquence après le filtrage WDG de fonction $f$ alors on peut écrire :

$$s_2[m] \text{ pour } m \in [0,\ M-1]$$

$$s_3[n] = s_2[mod(n-U,M)] \times f[n] \text{ pour } n \in [0,\ M+L-1] \text{ et } U = L_1.$$

Selon cette expression, la séquence obtenue $s_3[n]$ peut soit comprendre un préfix de $L_1$ échantillons, soit un postfix de $L_2$ échantillons, soit un préfix et un postfix respectivement de $L_1$ et de $L_2$ échantillons.

La figure 13 illustre l'ajout selon un mode de réalisation, d'un préfix et d'un postfix cycliques à un symbole multi porteuses orthogonal ainsi que le filtrage selon l'invention. Le procédé copie les $L_1$ derniers échantillons d'un symbole multi porteuses fourni par la IFFT de taille M au début de ce symbole créant ainsi un préfix cyclique. Le procédé copie en outre les $L_2$ premiers échantillons du même symbole multi porteuses à la fin de ce symbole créant ainsi un postfix cyclique. Le symbole comprend alors $M + L$ échantillons, avec $L = L_1 + L_2$. Le filtrage intervient sur les $M + L$ échantillons, il revient à filtrer avec une fonction $f(n)$ les échantillons n de la séquence :

$$f(n) = \begin{cases} a(n) & n \in [0, L-1] \\ 1 & n \in [L, M-1] \\ b(n) & n \in [M, M+L-1] \end{cases}$$

avec $a^2(n) + b^2(n + M) = 1$ pour $n \in [0, L-1]$ et avec $a(n)$ et $b(n)$ des fonctions monotones. Donc $a(n) = \sqrt{1 - b^2(n + M)}$ pour $n \in [0, L-1]$.

Selon un mode de réalisation, $a(n) = \cos(\frac{\pi}{2L}(L-1-n))$ et $b(n) = \sin(\frac{\pi}{2L}(M+L-1-n))$.

Selon un mode de réalisation, $a(n) = \cos(\frac{\pi}{2L^2}(L-1-n)^2)$ et $b(n) = \sin(\frac{\pi}{2L^2}(M+L-1-n)^2)$.

Selon un mode de réalisation, $b(n) = e^{-\left(\alpha\left(\frac{n-M}{L}\right)^{\beta}\right)}$ et $a(n) = \sqrt{1 - b^2(n+M)}$, $n \in [0, L-1]$, $\alpha$ et $\beta$ sont des paramètres ayant une valeur réelle strictement supérieur à zéro. Typiquement leur valeur est ajustée lors de simulations.

La figure 14 illustre la mise en trame de trois symboles successifs avec un recouvrement temporel $D$ entre deux symboles successifs. $D$ est un entier supérieur ou égal à zéro dont la valeur est typiquement déterminé lors de simulations. $D$ est un paramètre qui correspond à un nombre d'échantillons d'un symbole FC-OFDM superposés par d'autres échantillons du symbole FC-OFDM suivant.

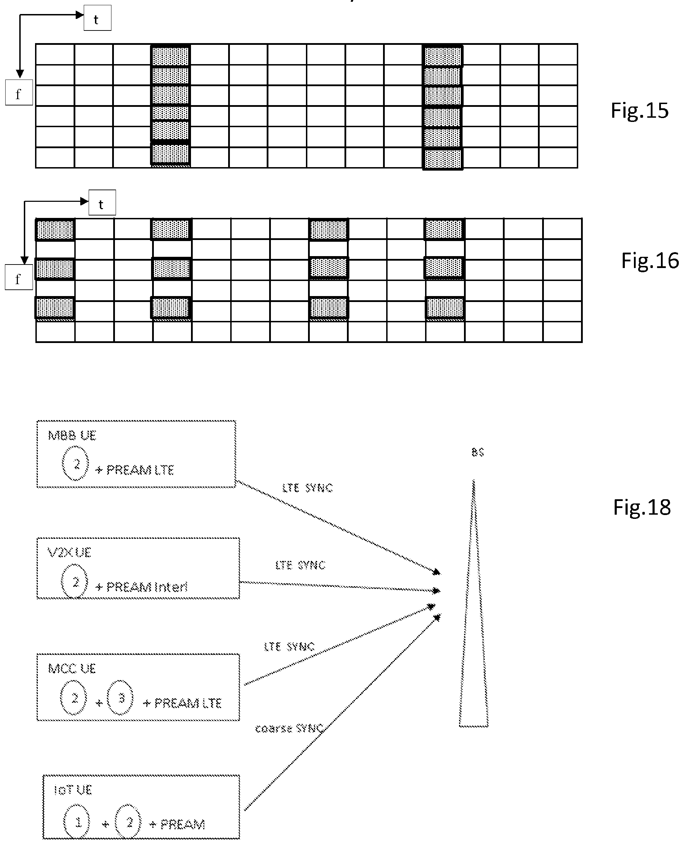

La transmission respecte une trame temps fréquence avec des préambules multiplexés dans la trame. Selon un mode de réalisation, le multiplexage est configurable, dépend du service et est sous contrainte d'un nombre maximum de préambules. En fonction du service, la configuration permet de sélectionner 5 en référence à la figure 12 un multiplexage en temps des préambules ou un multiplexage en temps et en fréquence des préambules. Dans une trame voie montante (UL) selon le standard LTE, les préambules sont toujours transmis à une position fixe avec un intervalle de 0,5ms. La figure 15 représente une sous-trame de 1ms conforme au standard LTE dans laquelle les préambules sont multiplexés à la 4e et la 11e position. Les préambules sont donc uniquement multiplexés en temps. Selon l'invention, le multiplexage peut intervenir simultanément en temps et en fréquence comme illustré par la figure 16. Selon l'exemple illustré, l'intervalle en temps entre les préambules est réduit augmentant la robustesse vis-à-vis du Doppler et permettant une estimation temporelle du canal compatible par exemple d'un service V2X. En contrepartie, les préambules sont multiplexés en fréquence ce qui permet de conserver la même bande consommée (overhead) par les préambules.

Le procédé selon l'invention est flexible avec une adaptation des données avant transformation fréquence temps selon une configuration dépendant du service pour générer des symboles de données.

La configuration dépendante du service permet, en référence à la figure 12, de sélectionner aucun, un ou plusieurs traitements parmi un bourrage 7, 0 PAD, une transformée 8 de Fourier discrète, DFT, de taille N, un étalement 9, SPG.

Le bourrage consiste à ajouter des zéros (« zero padding » selon la terminologie anglosaxonne) pour ajuster le nombre de données en entrée.

L'étalement permet d'augmenter la diversité des données. Un exemple d'étalement est illustré par la figure 17. Selon cet exemple, les données en entrée sont prises par deux, a et b, et chacune est pondérée avec $P$ poids, $w_p$, $p = 1, ..., P$, pour générer deux fois $P$ données étalées : $aw_1, ..., aw_P, bw_1, ..., bw_P$. Le facteur $P$ d'étalement est strictement supérieur à un. Les poids peuvent avoir une valeur constante : $|w_1| = |w_2| = \cdots = |w_P|$ ou une valeur non constante et un signe constant ou un signe non constant.

La figure 18 illustre un exemple de mise en œuvre d'un procédé de transmission selon l'invention. Quatre terminaux UE transmettent des données associées à des services différents. La station de base BS reçoit simultanément (accès FDMA) les données provenant des quatre terminaux. Le 1er terminal transmet des données associées à un service MBB. Le 2e terminal transmet des données associées à un service V2X. Le 3e terminal transmet des données associées à un service MCC. Les 1er, 2e et 3e terminaux bénéficient d'un mécanisme de synchronisation (LTE SYNC) vis-à-vis de la station de base BS. Le 4e terminal transmet des données associées à un service IoT et ne bénéficie pas d'un mécanisme de synchronisation ou bénéficie d'un mécanisme de synchronisation grossière (coarse SYNC) vis-à-vis de la station de base BS. Chaque terminal dispose de sa propre configuration qu'il transmet à la station de base. Le 1er terminal est configuré avec activation de la DFT (p2, figure 12) et du multiplexage en temps des préambules (PREAM LTE). Le 2e terminal est configuré avec activation de la DFT (p2, figure 12) et du multiplexage en temps et en fréquence des préambules (PREAM Interl). Le 3e terminal est configuré avec activation de la DFT (p2, figure 12), de l'étalement (p3, figure 12) et du multiplexage en temps des préambules (PREAM LTE). Le 4e terminal est configuré avec activation du bourrage, de la DFT (p2, figure 12) et du multiplexage en temps des préambules (PREAM LTE).

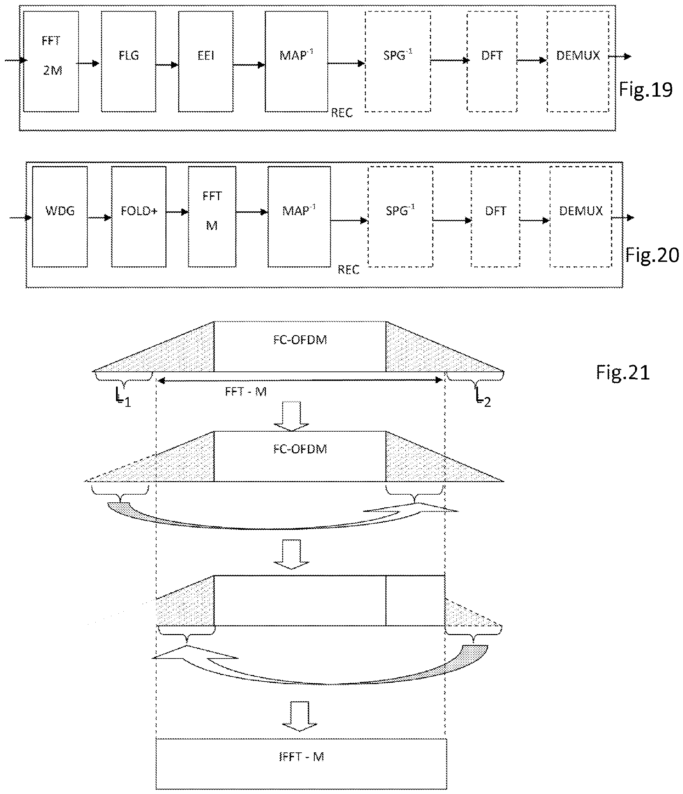

La réception à la station de base est illustrée par les figures 19 et 20 qui correspondent respectivement à deux modes de réalisation. Quel que soit le service, la réception met en œuvre une même transformée temps fréquence FFT.

Selon le 1er mode, figure 19, les symboles FC-OFDM reçus de longueur $M + L$ échantillons sont filtrés par le filtre WDG, puis subissent un repliement mis en œuvre par un calculateur FOLD+ avant la FFT de taille M. Le filtre WDG est le même que celui à l'émission, il met en œuvre la fonction $f(n)$. Le repliement selon un mode de réalisation est illustré par la figure 21. Les $L_1$ premiers échantillons du symbole FC-OFDM filtré sont additionnés aux échantillons qui précèdent les $L_2$ derniers échantillons de ce symbole et les $L_1$ premiers échantillons du symbole FC-OFDM filtré sont supprimés. Les $L_2$ derniers échantillons du symbole FC-OFDM filtré sont additionnés aux échantillons qui suivent les $L_1$ premiers échantillons du symbole FC-OFDM filtré et les $L_2$ derniers échantillons du symbole FC-OFDM filtré sont supprimés. Ce mode est adapté à l'émission d'un symbole FC-OFDM avec un préfix et un postfix cyclique de respectivement $L_1$ et $L_2$ échantillons.

La FFT intervient sur les $M$ échantillons obtenus après additions qui selon le mode illustré par la figure 21 correspondent aux $M$ échantillons centraux, i.e. selon l'exemple $L_1 = L_2$. Les échantillons en sortie de FFT sont démappés par un démappeur MAP$^{-1}$ puis le traitement qui suit dépend de la configuration utilisée à l'émission par le terminal.

Selon le 2nd mode, figure 20, les symboles FC-OFDM reçus de longueur $M + L$ sont bourrés avec des zéro pour obtenir une séquence de longueur 2M. Cette séquence est transformée dans le domaine fréquentiel avec une FFT de taille 2M. Les échantillons fréquentiels sont filtrés avec un filtre FLG de fonction $F(m)$ telle que :

$$F(m) = \sum_{n=0}^{2M-1} f(n) e^{-\frac{j2\pi mn}{2M}}.$$

Après filtrage, seuls les échantillons d'indice pair sont conservés en sortie du sélectionneur EEI. Les échantillons en sortie du sélectionneur sont démappés par un démappeur MAP$^{-1}$ puis le traitement qui suit dépend de la configuration utilisée à l'émission par le terminal.

[IEEE Access] Hao LIN, "Flexible Configured OFDM for 5G Air Interface", IEEE ACCESS, 1er janvier 2015, XP055276445

[3GPP] "Motivation for new WI on Low Complexity and Enhanced Coverage LTE UE for MTC", 3GPP TSG RAN Meeting #64 RP-140845, Sophia Antipolis, France, 10 - 13 June 2014

## Revendications

1. Procédé (1) de transmission de données correspondant à un service parmi plusieurs services de communication mettant en œuvre une même transformée (IFFT) fréquence temps de taille $M$ quel que soit le service pour générer des symboles multi porteuses orthogonaux de M échantillons à partir de symboles de données pouvant être adaptés avant mappage en entrée de la transformée selon une configuration dépendant du service, tel que, lors d'une mise en trame, il ajoute une extension cyclique de $L = L_1 + L_2$ échantillons pour obtenir une séquence de $M + L$ échantillons, le procédé étant caractérisé en que :

   - la configuration peut permettre de sélectionner aucun, un ou plusieurs traitements parmi un bourrage (0 PAD), une transformée de Fourier discrète (DFT) de taille N et un étalement (SPG) pour adapter les données et
   - il effectue un filtrage (WDG) temporel selon une fonction $f(n)$ des échantillons $n$ de la séquence, $L$ et $M$ étant des naturels non nuls, $L < M$ :

$$f(n) = \begin{cases} a(n) & n \in [0, L-1] \\ 1 & n \in [L, M-1] \\ b(n) & n \in [M, M+L-1] \end{cases}$$

   avec $a(n)$ et $b(n)$ des fonctions monotones et avec $a^2(n) + b^2(n + M) = 1$ pour $n \in [0, L - 1]$, $L_1 \geq 0$ et $L_2 \geq 0$

   dans lequel $b(n) = e^{-\left(\alpha\left(\frac{n-M}{L}\right)^\beta\right)}$ et $a(n) = \sqrt{1 - b^2(n + M)}$ pour $n \in [0, L - 1]$, $\alpha$ et $\beta$ étant des paramètres ayant une valeur réelle strictement supérieur à zéro.

2. Procédé (1) selon la revendication 1, dans lequel la fonction $f(n)$ est non-symétrique :
   $f(n) \neq f(M + L - 1 - n)$ pour $n \in [0, L - 1]$.

3. Procédé (1) selon la revendication 1, dans lequel l'extension cyclique comporte un préfix cyclique de $L_1$ échantillons et un postfix cyclique de $L_2$ échantillons, $L_1 \# 0$ et $L_2 \neq 0$.

**4.** Procédé (1) selon la revendication 1 ou 2, dans lequel la transmission respecte une trame temps fréquence avec des préambules multiplexés dans la trame selon une configuration dépendant du service sous contrainte d'un nombre maximum de préambules, la configuration dépendant du service pouvant permettre de sélectionner un multiplexage en temps des préambules ou un multiplexage en temps et en fréquence des préambules.

**5.** Procédé (1) selon la revendication 1 dans lequel l'étalement (SPG) a un facteur d'étalement $P$ et chaque donnée étalée est multipliée par un poids $w_p$, $p$ = 1, ..., $P$.

**6.** Procédé (1) selon l'une des revendications précédentes dans lequel lors de la mise en trame deux symboles successifs se recouvrent en temps d'une valeur $D$, $D$ étant un entier supérieur ou égal à zéro.

**7.** Procédé (1) selon l'une des revendications précédentes comprenant l'émission d'un message de signalisation codant la configuration.

**8.** Dispositif (UE) de transmission de données correspondant à un service parmi plusieurs services de communication mettant en œuvre une modulation multi porteuse à $M$ sous porteuses, **caractérisé en ce qu'**il comprend :

- un transformateur (IFFT) fréquence temps de taille $M$ commun quel que soit le service générant des symboles multi porteuses orthogonaux de M échantillons à partir de symboles de données pouvant être adaptés avant mappage en entrée du transformateur selon une configuration dépendant du service qui peut permettre de sélectionner aucun, un ou plusieurs traitements parmi un bourrage (0 PAD), une transformée de Fourier discrète (DFT) de taille N et un étalement (SPG) pour adapter les données,
- un démultiplexeur pour mettre en série les échantillons d'un symbole multi porteuses et effectuer une mise en trame en ajoutant une extension cyclique de $L = L_1 + L_2$ échantillons pour obtenir une séquence de $M + L$ échantillons, $L_1 \geq 0$ et $L_2 \geq 0$,
- un filtre (WDG) temporel selon une fonction $f(n)$ des échantillons $n$ de la séquence, $L$ et $M$ étant des naturels non nuls : $f(n) = \begin{cases} a(n) & n \in [0, L-1] \\ 1 & n \in [L, M-1] \\ b(n) & n \in [M, M+L-1] \end{cases}$ avec $L < M$, $a(n)$ et $b(n)$ des fonctions monotones et

avec $a^2(n) + b^2(n + M) = 1$ pour $n \in [0, L-1]$

dans lequel $b(n) = e^{-\left(\alpha\left(\frac{n-M}{L}\right)^{\beta}\right)}$ et $a(n) = \sqrt{1 - b^2(n + M)}$ pour $n \in [0, L-1]$, $\alpha$ et $\beta$ étant des paramètres ayant une valeur réelle strictement supérieur à zéro.

**Patentansprüche**

**1.** Verfahren (1) zum Übertragen von Daten, die einem Dienst aus mehreren Kommunikationsdiensten entsprechen, das unabhängig von dem Dienst eine Zeit-FrequenzTransformation (IFFT) der Größe M verwendet, um orthogonale Mehrträgersymbole von M Abtastwerten ausgehend von Datensymbolen zu erzeugen, die vor dem Mapping am Eingang der Transformation gemäß einer von dem Dienst abhängigen Konfiguration in der Art angepasst werden können, dass während eines Framings eine zyklische Erweiterung von L = $L_1$ + $L_2$ Abtastwerten hinzugefügt wird, um eine Folge von M + L Abtastwerten zu erhalten, wobei das Verfahren **dadurch gekennzeichnet ist, dass**:

- die Konfiguration es ermöglichen kann, keine, eine oder mehrere Verarbeitungen aus einer Auffüllung (0 PAD), einer diskreten Fourier-Transformation (DFT) der Größe N und einer Verteilung (SPG) auszuwählen, um die Daten anzupassen, und
- eine zeitliche Filterung (WDG) gemäß einer Funktion f (n) der Abtastwerte n der Sequenz durchgeführt wird, wobei L und M natürliche Zahlen ungleich Null sind und L < M:

$$f(n) = \begin{cases} a(n) & n \in [0, L-1] \\ 1 & n \in [L, M-1] \\ b(n) & n \in [M, M+L-1] \end{cases}$$

wobei a(n) und b(n) monotone Funktionen sind und $a^2(n) + b^2(n + M) = 1$ für $n \in [0, L-1]$, $L_1 \geq 0$ und $L_2 \geq 0$

wobei $b(n) = e^{-\left(\alpha\left(\frac{n-M}{L}\right)^{\beta}\right)}$ und $a(n) = \sqrt{1 - b^2(n+M)}$ für n ∈ [0, L - 1] und α und β Parameter mit einem realen Wert sind, der streng größer als Null ist.

2. Verfahren (1) nach Anspruch 1, bei dem die Funktion f(n) nicht symmetrisch ist:
$f(n) \neq$ f(M + L - 1 - n) für n ∈ [0, L - 1].

3. Verfahren (1) nach Anspruch 1, bei dem die zyklische Erweiterung ein zyklisches Präfix von $L_1$ Abtastwerten und ein zyklisches Postfix von $L_2$ Abtastwerten aufweist, mit $L_1 \neq 0$ und $L_2 \neq 0$.

4. Verfahren (1) nach Anspruch 1 oder 2, bei dem die Übertragung einen Zeit-Frequenz-Frame mit Präambeln einhält, die in dem Frame gemäß einer von dem Dienst abhängigen Konfiguration unter Einschränkung einer maximalen Anzahl von Präambeln gemultiplext sind, wobei die von dem Dienst abhängige Konfiguration das Auswählen eines Zeitmultiplexing der Präambeln oder eines Zeit- und Frequenzmultiplexing der Präambeln ermöglichen kann.

5. Verfahren (1) nach Anspruch 1, bei dem die Verteilung (SPG) einen Verteilungsfaktor P aufweist und jedes verteilte Datenelement mit einer Gewichtung $w_p$, p = 1, ..., P multipliziert wird.

6. Verfahren (1) nach einem der vorhergehenden Ansprüche, bei dem sich während des Framings zwei aufeinanderfolgende Symbole zeitlich um einen Wert D überlappen, wobei D eine ganze Zahl größer oder gleich Null ist.

7. Verfahren (1) nach einem der vorhergehenden Ansprüche, das das Senden einer Signalisierungsnachricht aufweist, die die Konfiguration codiert.

8. Vorrichtung (UE) zum Übertragen von Daten, die einem Dienst aus mehreren Kommunikationsdiensten entsprechen, die eine Mehrträgermodulation mit M Unterträgern verwendet, **dadurch gekennzeichnet, dass** sie Folgendes aufweist:

- eine unabhängig von dem Dienst gemeinsame Zeit-Frequenz-Transformation (IFFT) der Größe M, die orthogonale Mehrträgersymbole von M Abtastwerten ausgehend von Datensymbolen erzeugt, die vor dem Mapping am Eingang der Transformation gemäß einer von dem Dienst abhängigen Konfiguration in der Art angepasst werden können, die es ermöglichen kann, keine, eine oder mehrere Verarbeitungen aus einer Auffüllung (0 PAD), einer diskreten Fourier-Transformation (DFT) der Größe N und einer Verteilung (SPG) auszuwählen, um die Daten anzupassen,
- einen Demultiplexer zum Serialisieren der Abtastwerte eines Mehrträgersymbols und zum Durchführen eines Framings unter Hinzufügung einer zyklischen Erweiterung von L = $L_1$ + $L_2$ Abtastwerten, um eine Folge von M + L Abtastwerten zu erhalten, wobei $L_1 \geq 0$ und $L_2 \geq 0$,
- einen Zeitfilter (WDG) gemäß einer Funktion f (n) der Abtastwerte n der Sequenz, wobei L und M natürliche Zahlen ungleich Null sind:

$$f(n) = \begin{cases} a(n) & n \in [0, L-1] \\ 1 & n \in [L, M-1] \\ b(n) & n \in [M, M+L-1] \end{cases}$$

wobei L < M, a(n) und b(n) monotone Funktionen sind und $a^2(n) + b^2(n + 25\,M) = 1$ für n ∈ [0, L - 1] wobei

$b(n) = e^{-\left(\alpha\left(\frac{n-M}{L}\right)^{\beta}\right)}$ und $a(n) = \sqrt{1 - b^2(n+M)}$ für n ∈ [0, L - 1] und α und β Parameter mit einem realen Wert sind, der streng größer als Null ist.

**Claims**

1. Method (1) for transmission of data corresponding to a service from among several communications services implementing a same frequency-time transform (IFFT) of size *M* irrespective of the service in order to generate orthogonal multi-carrier symbols of M samples starting from data symbols that may be adapted prior to mapping at the input of the transform according to a configuration depending on the service, such that, during a frame setup, it adds a cyclic extension of *L* = $L_1$ + $L_2$ samples in order to obtain a sequence of *M* + *L* samples, the method being **characterized in that**:

- the configuration may allow no, one or several processing operations to be selected from among a padding (0 PAD), a discrete Fourier transform (DFT) of size N and a spread (SPG) for adapting the data and
- it carries out a time-domain filtering (WDG) according to a function $f(n)$ of the samples $n$ of the sequence, $L$ and $M$ being non-zero natural numbers, $L < M$ :

$$f(n) = \begin{cases} a(n) & n \in [0, L-1] \\ 1 & n \in [L, M-1] \\ b(n) & n \in [M, M+L-1] \end{cases}$$

where $a(n)$ and $b(n)$ are monotonic functions and where $a^2(n) + b^2(n+M) = 1$ for $n \in [0, L-1]$, $> 0$ and $L_2 \geq 0$

wherein $b(n) = e^{-\left(\alpha\left(\frac{n-M}{L}\right)^\beta\right)}$ and $a(n) = \sqrt{1 - b^2(n+M)}$ for $n \in [0, L-1]$, $\alpha$ and $\beta$ are parameters having a real value strictly greater than zero.

2. Method (1) according to Claim 1, wherein the function $f(n)$ is non-symmetrical: $f(n) \neq f(M + L - 1 - n)$ for $n \in [0, L-1]$ .

3. Method (1) according to Claim 1, wherein the cyclic extension comprises a cyclic prefix of $L_1$ samples and a cyclic suffix of $L_2$ samples, $L_1 \neq 0$ and $L_2 \neq 0$.

4. Method (1) according to either of Claims 1 and 2, wherein the transmission complies with a time-frequency frame with preambles multiplexed within the frame according to a configuration depending on the service under the constraint of a maximum number of preambles, the configuration depending on the service being able to allow a time-domain multiplexing of the preambles or a time-domain and frequency-domain multiplexing of the preambles to be selected.

5. Method (1) according to Claim 1, wherein the spread (SPG) has a spread factor $P$ and each spread datum is multiplied by a weighting $w_p$, $p = 1,...,P$.

6. Method (1) according to one of the preceding claims, wherein, during the frame setup, two successive symbols overlap in time by a value $D$, $D$ being an integer greater than or equal to zero.

7. Method (1) according to one of the preceding claims, comprising the transmission of a signalling message coding the configuration.

8. Device (UE) for transmission of data corresponding to a service from among several communications services implementing a multi-carrier modulation with $M$ sub-carriers, **characterized in that** it comprises:

- a frequency-time transformer (IFFT) of size $M$ that is common irrespective of the service generating orthogonal multi-carrier symbols of M samples starting from data symbols that may be adapted prior to mapping at the input of the transformer according to a configuration depending on the service which may allow no, one or several processing operations to be selected from among a padding (0 PAD), a discrete Fourier transform (DFT) of size N and a spread (SPG) for adapting the data,
- a demultiplexer for serializing the samples of a multi-carrier symbol and carrying out a frame setup by adding a cyclic extension of $L = L_1 + L_2$ samples in order to obtain a sequence of $M + L$ samples, $L_1 \geq 0$ and $L_2 \geq 0$,
- a time-domain filter (WDG) according to a function $f(n)$ of the samples $n$ of the sequence, $L$ and $M$ being non-zero natural numbers: $f(n) = \begin{cases} a(n) & n \in [0, L-1] \\ 1 & n \in [L, M-1] \\ b(n) & n \in [M, M+L-1] \end{cases}$ where $L < M$, $a(n)$ and $b(n)$ are monotonic functions and where $a^2(n) + b^2(n+M) = 1$ for $n \in [0, L-1]$

wherein $b(n) = e^{-\left(\alpha\left(\frac{n-M}{L}\right)^\beta\right)}$ and $a(n) = \sqrt{1 - b^2(n+M)}$ for $n \in [0, L-1]$, $\alpha$ and $\beta$ are parameters

having a real value strictly greater than zero.

Fig.1

Fig.2

Fig.3

Fig.4

Fig.5

Fig.6

Fig.7

Fig.8

Fig.9

Fig.10

Fig.11

BS

1-by-1 TA

1-to-{TA1,...TAi,...}

Fig.14

Fig.17

a

b

SPG

$w_1{}^*$a

$w_2{}^*$a

$w_n{}^*$a

$w_1{}^*$b

$w_2{}^*$b

$w_n{}^*$b

7    8    9   $s_1[\quad]$   6    2    3    4

| 0 PAD | DFT | SPG | MAP | IFFT | +FIXs | WDG |

(1)    (2)    (3)

5

PREAM LTE /interl

$s_2[\quad]$    $s_3[\quad]$

1   UE

Fig.12

| IFFT - M |

| Cyclic prefix | IFFT - M |

| Cyclic prefix | IFFT - M | Cyclic postfix |

| | FC-OFDM | |

$L_1$   $L_2$     $L_1$   $L_2$

Fig.13

Fig.15

Fig.16

Fig.18

Fig.19

Fig.20

Fig.21

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HAO LIN.** Flexible Configured OFDM for 5G Air Interface. *IEEE ACCESS,* 01 Janvier 2015

- Motivation for new WI on Low Complexity and Enhanced Coverage LTE UE for MTC. *3GPP TSG RAN Meeting #64 RP-140845,* 13 Juin 2014